# EUROPÄISCHE PATENTSCHRIFT

(11) **EP 3 481 609 B1**
(45) Veröffentlichungstag und Bekanntmachung des Hinweises auf die Patenterteilung: **12.04.2023**
(21) Anmeldenummer: 17757665.9
(22) Anmeldetag: 07.07.2017
(51) Int. Cl.: B27M 3/00

(54) **VERFAHREN UND VORRICHTUNG ZUM HERSTELLEN VON LAMELLENLAGEN AUS HINTEREINANDER AUFGEREIHTEN LAMELLEN**
METHOD AND DEVICE TO PRODUCE LAMELLA LAYERS OF LINED UP STRINGED LAMELLA
PROCEDE ET DISPOSITIF POUR PRODUIRE DES COUCHES DE LAMELLES ET FORMEES DE LAMELLES RANGEES LES UNES DERRIERE LES AUTRES

(30) Priorität: 08.07.2016 AT 506162016
(43) Veröffentlichungstag der Anmeldung: 15.05.2019
(73) Patentinhaber: Fill Gesellschaft m.b.H., 4942 Gurten (AT)
(72) Erfinder: METZ, Karl, 4970 Eitzing (AT)
(74) Vertreter: Burger, Hannes
(86) Internationale Anmeldenummer: PCT/AT2017/060170
(87) Internationale Veröffentlichungsnummer: WO 2018/006114

(56) Entgegenhaltungen:
- EP-A1- 2 251 168
- DE-C1- 19 813 132
- DE-U1- 8 909 010
- DE-U1- 9 301 981
- US-A- 4 941 521

## Beschreibung

Die Erfindung betrifft ein Verfahren zum Herstellen von Lamellenlagen aus hintereinander aufgereihten Lamellen, gemäß dem Oberbegriff des Anspruchs 1 sowie eine Vorrichtung zum Durchführen des Verfahrens gemäß dem Oberbegriff des Anspruchs 8. Ein solches Verfahren und eine solche Vorrichtung sind aus dem Dokument DE 198 13 132 C1 bekannt.

Aus der EP 2 251 168 B1 ist ein Verfahren zur Herstellung von Holzplatten bekannt, bei dem Brettware in Lamellen aufgeteilt wird, die zu längeren Lamellenlagen so hintereinander gesetzt werden, dass die Summe der Lamellenlänge wenigstens der Länge der herzustellenden Lamellenlage entspricht, wobei die Lamellenlagen mit ihren Längsseiten aneinanderliegend zur Holzplatte verleimt werden. Für die Lamellen unterschiedlicher Längen sind Pufferstationen vorgesehen, denen die Lamellen zur Bildung der Lamellenlagen entnommen werden. Die Lamellen werden intelligent so zusammengefügt, dass die endseitigen Lamellen innerhalb der Lamellenlage so lang sind, dass sie bei weiterer Bearbeitung der Holzplatte nicht stören, und dass die letzte, innerhalb der Lamellenlage liegende, zu lange Lamelle so abgetrennt wird, dass die Lamellenlage die gewünschte Länge hat, wobei die letzte Lamelle innerhalb der Lamellenlage so lang gewählt wird, dass nach dem Abtrennen der Überlänge dieser Lamelle das Reststück der Lamelle die erste Lamelle der nächsten herzustellenden Lamellenlage bilden kann.

Das in der EP 2 251 168 B1 beschriebene Verfahren weist den Nachteil auf, dass bei Verwendung des Reststückes als erste Lamelle der nächsten herzustellenden Lamellenlage diese immer eine verkürzte Länge aufweist und daher der erste Stoß immer in einem bestimmten Bereich angeordnet ist. Darüber hinaus ist an dem beschriebenen Verfahren nachteilig, dass die Länge des Reststückes nicht exakt bekannt ist und sich ein Toleranzfehler in der Länge des Reststückes aufsummieren kann. Somit kann im Extremfall das Reststück unbrauchbar kurz werden.

Aus der EP 2 143 534 A2 ist eine weitere Anlage bzw. ein weiteres Verfahren zum Herstellen von Deckschichtdielen bekannt. Die mit dieser Anlage und diesem Verfahren herzustellenden Deckschichtdielen sind jeweils aus mehreren, an ihren Längs- und/oder Stirnseiten aneinandergesetzten und miteinander verleimten Deckschicht-Holzlamellen zusammengesetzt und dienen in der Regel als Nutzschicht einer Parkettdiele eines Mehrschichtparketts. In einer solchen Anlage werden die Holzlamellen aus dem Lamellenmagazin entsprechend einem erwünschten Erscheinungsbild der Deckschichtdielen in bestimmter Reihenfolge auf die Förderstrecke gegeben. Hierbei ist ebenfalls vorgesehen, das Lamelle durchtrennt wird, wobei der stromabwärts des Trennschnitts liegende, abgetrennte Teil der Holzlamelle der vorangehenden Deckschicht-Anordnung zugeschlagen wird und der stromaufwärts des Trennschnitts liegende, abgesägte Teil der Holzlamelle die Stirnseite der nachfolgenden Deckschicht-Anordnung bildet.

Weitere derartige Anlagen bzw. Verfahren sind aus der DE19813132C1 und der JPS6119525A bekannt.

Die obig beschriebenen Nachteile treffen ebenfalls auf die Ausführungen der EP 2 143 534 A2, der DE19813132C1 und der JPS6119525A zu.

Aufgabe der vorliegenden Erfindung war es, die Nachteile des Standes der Technik zu überwinden und eine Vorrichtung und ein Verfahren zum Herstellen von Lamellenlagen aus hintereinander aufgereihten Lamellen zur Verfügung zu stellen, mittels der mehrere Lamellenlagen hergestellt werden können, welche zu einem hochwertigen Mehrschichtholz zueinander verleimt werden können.

Diese Aufgabe wird durch eine Vorrichtung und ein Verfahren gemäß den Ansprüchen gelöst.

Erfindungsgemäß ist ein Verfahren zum Herstellen von Lamellenlagen aus hintereinander aufgereihten Lamellen vorgesehen, wobei die Lamellen so hintereinander gesetzt werden, dass die Summe der Lamellenlänge wenigstens der Länge der herzustellenden Lamellenlage entspricht, wobei für die Lamellen unterschiedlicher Längen zumindest zwei Pufferstationen vorgesehen sind, denen die Lamellen zur Bildung der Lamellenlagen entnommen werden, wobei die Lamellen intelligent auf einem Fördermittel so zusammengefügt werden, dass die endseitige Lamelle innerhalb der Lamellenlage so lang ist und so abgetrennt wird, dass die Lamellenlage die gewünschte Länge hat und das abgetrennte Reststück der endseitigen Lamelle in einer nachfolgenden Lamellenlage eingesetzt werden kann. Das Reststück der endseitigen Lamelle wird aus dem Förderfluss entnommen, auf einem Reststückfördermittel zwischengespeichert wird und in einer nachfolgenden Lamellenlage entsprechend einer Lamelle eingesetzt.

Erfindungsgemäß ist, dass im Gegensatz zu den aus dem Stand der Technik bekannten Verfahren das abgetrennte Reststück nicht das erste Stück einer direkt nächsten nachfolgenden Lamellenlage bildet, sondern dass das Reststück an beliebiger Stelle einer nachfolgenden Lamellenlage verwendet werden kann. Dadurch kann vermieden werden, dass immer die ersten Lamellen von Lamellenlagen durch kürzere Reststücke gebildet werden. Somit kann eine Anhäufung von stirnseitigen Fugen im Randbereich eines aus mehreren Lamellenlagen aufgebauten Mehrschichtholzes vermieden werden. Darüber hinaus kann das Reststück intelligent in eine nachfolgende Lamellenlage integriert werden, sodass der Abstand von Fugen benachbarter Lamellenlagen möglichst gering ausfällt.

Weiters kann es zweckmäßig sein, wenn dass das Reststück nach dem Abtrennen, mittels einem Erfassungsmittel, welches insbesondere am Reststückfördermittel angeordnet ist, vermessen wird und dessen Länge ermittelt wird. Von Vorteil ist hierbei, dass durch diese Maßnahme die exakte Länge des Reststückes bekannt ist und die Länge zur Berechnung von weiteren Lamellenlagen herangezogen wird. Im Gegensatz zu den aus dem Stand der Technik bekannten Dokumenten kann dadurch eine Aufsummierung von Toleranzfehlern, welche zu einer Verschiebung der Restlänge führen würde, weitestgehend vermieden werden.

Ferner kann vorgesehen sein, dass das Reststück zwischen zwei Lamellen einer nachfolgenden Lamellenlage eingesetzt wird. Von Vorteil ist hierbei, dass das kürzere Reststück nicht als endseitige Lamelle einer Lamellenlage eingesetzt werden muss. Dadurch kann das Erscheinungsbild und die Festigkeit von zu einem Mehrschichtholz zusammengesetzten Lamellenlagen verbessert werden.

Darüber hinaus kann vorgesehen sein, dass die Lamellenlagen mit ihren Längsseiten aneinanderliegend zu einem Mehrschichtholz verleimt werden, wobei das Reststück der endseitigen Lamelle so in eine nachfolgende Lamellenlage eingesetzt wird, dass die stirnseitigen Fugen zwischen den einzelnen Lamellen von aneinander anliegenden Lamellenlagen einen möglichst großen Abstand zueinander aufweisen. Von Vorteil ist hierbei, dass ein derartiges Mehrschichtholz ein ansprechendes Erscheinungsbild aufweisen kann und darüber hinaus gute mechanische Festigkeiten aufweisen kann.

Vorteilhaft ist auch eine Ausprägung, gemäß welcher vorgesehen sein kann, dass die einzelnen Lamellen einer Lamellenlage in einem Zusammenführbereich stirnseitig auf Anschlag aneinander zusammengeführt werden, während stromabwärts in einem Abtrennbereich an der vorhergehenden Lamellenlage die endseitige Lamelle abgetrennt wird. Durch diese Maßnahme kann die Durchlaufzeit einer Lamellenlage in der Vorrichtung vermindert werden und dadurch die Effizienz der gesamten Bearbeitungsanlage verbessert werden.

Gemäß einer Weiterbildung ist es möglich, dass das Reststück einer Lamellenlage frühestens in einer auf die direkt folgende Lamellenlage nachfolgenden Lamellenlage eingesetzt wird. Dadurch kann erreicht werden, dass ein ausreichend großes Zeitfenster zum Transport des Reststückes in der Vorrichtung verbleibt und somit die Taktzeit der Vorrichtung nicht durch den Transport des Reststückes vermindert wird.

Ferner kann es zweckmäßig sein, wenn am Reststückfördermittel mehrere Reststücke gleichzeitig aufgenommen sind. Von Vorteil ist hierbei, dass das Reststückfördermittel durch diese Maßnahme gleichzeitig als Puffer dienen kann.

Erfindungsgemäß ist eine Vorrichtung zum Herstellen von Lamellenlagen aus hintereinander aufgereihten Lamellen, insbesondere zum Durchführen eines obig beschriebenen Verfahrens vorgesehen. Die Vorrichtung umfasst:
- zumindest zwei Pufferstationen, welche zum Aufnehmen von verschieden langen Lamellen ausgebildet sind;
- ein Fördermittel zum Fördern der aus den Pufferstationen entnommenen Lamellen und zum Sammeln der Lamellen zu einer Lamellenlage;
- einen Abtrennanschlag, welcher im Bereich des Fördermittels angeordnet ist und zum Aufstauen der auf dem Fördermittel angeordneten Lamellen ausgebildet ist;
ein Trennmittel zum Abtrennen einer endseitigen Lamelle der auf dem Fördermittel angeordneten Lamellenlage auf eine gewünschte Länge, wodurch ein Reststück von der endseitigen Lamelle abgetrennt wird, wobei die Länge durch den Abstand zwischen dem Abtrennanschlag und dem Trennmittel definiert wird. Ein Reststückfördermittel ist zur Aufnahme des abgetrennten Reststückes der endseitigen Lamelle vorgesehen, wobei eine Auslagerungsvorrichtung zur Übergabe des Reststückes vom Fördermittel auf das Reststückfördermittel vorgesehen ist, und eine Eingliederungsvorrichtung vorgesehen ist, mittels welcher das Reststück wieder auf das Fördermittel überführbar ist.

Von Vorteil an der erfindungsgemäßen Vorrichtung ist, dass auf dieser das erfindungsgemäße Verfahren durchgeführt werden kann und dass am Reststückfördermittel das abgetrennte Reststück aufgenommen und einer nachfolgenden Lamellenlage in beliebiger Position zugeführt werden kann.

Weiters kann vorgesehen sein, dass das Reststückfördermittel zum Fördern des Reststückes entgegen der Förderrichtung des Fördermittels ausgebildet ist. Durch diese Maßnahme kann erreicht werden, dass das Reststück zu dem Bereich der Vorrichtung gefördert werden kann, in welchem die Puffer angeordnet sind und dort auf das Fördermittel eingegliedert werden kann.

Gemäß einer besonderen Ausprägung ist es möglich, dass ein Zusammenführanschlag vorgesehen ist, welcher am Fördermittel stromaufwärts des Abtrennanschlages angeordnet ist und zum Zusammenführen der einzelnen Lamellen dient. Von Vorteil ist hierbei, dass das Zusammenführen der Lamellenlage und das Abtrennen der Lamellenlage auf eine bestimmte Länge parallel zueinander erfolgen können.

Entsprechend einer vorteilhaften Weiterbildung kann vorgesehen sein, dass die Auslagerungsvorrichtung und/oder die Eingliederungsvorrichtung in Form eines Schiebers ausgebildet sind, welcher quer zur Förderrichtung des Fördermittels wirkt. Von Vorteil ist hierbei, dass eine derartig ausgeführte Auslagerungsvorrichtung bzw. Eingliederungsvorrichtung einfach ausgebildet ist und daher wartungsarm und im Betrieb wenig fehleranfällig ist.

Insbesondere kann es vorteilhaft sein, wenn das Trennmittel zum Abtrennen der endseitigen Lamelle in Form einer Kreissäge ausgebildet ist, welche an einem Verfahrschlitten gelagert ist und dass die Auslagerungsvorrichtung ebenfalls am Verfahrschlitten angeordnet ist. Eine derartige Kreissäge ist gut zum Abtrennen der Lamelle geeignet und ist darüber hinaus wenig fehleranfällig und auch wartungsarm.

Ferner kann vorgesehen sein, dass das Fördermittel und/oder das Reststückfördermittel mehrere verschiedene Förderabschnitte aufweisen. Von Vorteil ist hierbei, dass die einzelnen Förderabschnitte getrennt voneinander bewegt werden können und dass beispielsweise die Kreissäge zwischen die einzelnen Förderabschnitte einfahren kann, sodass zum Abtrennen der Lamelle ein sauberer Schnitt ermöglicht wird.

Eine nachfolgende Lamellenlage im Sinne dieses Dokumentes kann eine beliebige auf eine gegenständlich beschriebene Lamellenlage nachfolgende Lamellenlage sein. Diese muss daher nicht zwingend die nächste Lamellenlage sein. Insbesondere ist eine nachfolgende Lamellenlage jene Lamellenlage, welche zeitlich später hergestellt wird. Die Förderrichtung des Fördermittels wird als Förderfluss oder Strom gesehen. Entgegen der Förderrichtung wird daher als Stromaufwärts und in Förderrichtung wird daher als stromabwärts bezeichnet. Eine nachfolgende Lamellenlage befindet sich daher stromaufwärts zur gegenständlichen Lamellenlage.

Analog zur nachfolgenden Lamellenlage verhält es sich auch mit dem Ausdruck einer vorhergehenden Lamellenlage.

Ein Fördermittel im Sinne dieses Dokumentes kann jedes beliebige Fördermittel sein. Vorzugsweise werden jedoch Rollenförderer oder Bandförderer eingesetzt. Ist das Fördermittel in mehrere Förderabschnitte unterteilt, so können beispielsweise zwei Bandförderer vorgesehen sein, welche in einem Abstand zueinander angeordnet sind. Die beiden Bandförderer können einzeln angesteuert sein und somit unabhängig voneinander betrieben werden.

Sämtliche Berechnungen und Optimierungen für das Zusammenfügen der Lamellenlagen können in einer zentralen Rechnereinheit vorgenommen werden. Die zentrale Rechnereinheit kann zur Steuerung sämtlicher in der Fertigungsanlage eingesetzten Maschinen ausgebildet sein.

Alternativ zur Ausbildung von mehreren Pufferstationen kann auch vorgesehen sein, dass nur eine Pufferstation ausgebildet ist, in welcher die Lamellen entsprechend der intelligenten Automatik sortiert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Ansicht eines Ausführungsbeispiels einer Fertigungsanlage zum Bearbeiten von Holz in einer Draufsicht;
- Fig. 2: eine schematische Schnittdarstellung nach der Schnittlinie II-II eines Ausführungsbeispiels eines Trennmittels;
- Fig. 3: eine schematische Darstellung eines Ausführungsbeispiels von übereinander angeordneten Lamellenlagen;
- Fig. 4: eine schematische Darstellung eines Ausführungsbeispiels von nebeneinander angeordneten Lamellenlagen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

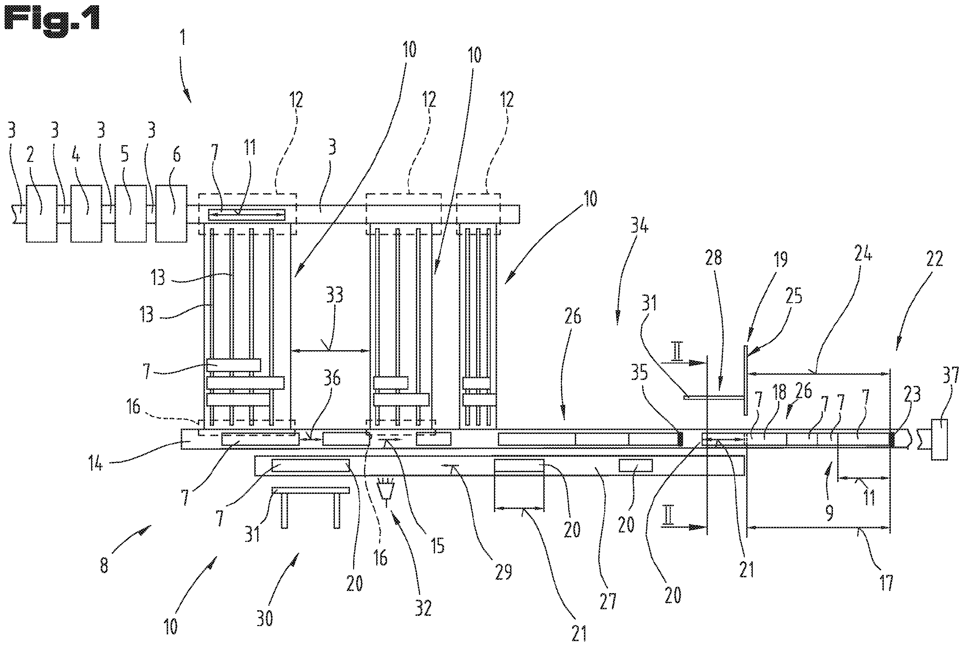

Fig. 1 zeigt in Draufsicht eine schematische Darstellung, insbesondere ein schematisches Anlagenlayout eines Ausführungsbeispiels einer Fertigungsanlage 1 zum Bearbeiten von Holz.

Einige Anlagenteile sind als Blackbox dargestellt, da deren genaue Funktion für die Erfindung nicht relevant ist. Der erste als Blackbox dargestellte Anlagenteil der Fertigungsanlage 1 kann beispielsweise ein Magazin 2 sein in welchem Rohzuschnitte der weiter zu verarbeitenden Rohbretter bereitgestellt werden können.

Weiters kann ein Zufördermittel 3 vorgesehen sein, mittels welchem die Rohzuschnitte der Bretter dem Magazin 2 zugeführt werden können. Zum Bereitstellen der Rohbretter kann vorgesehen sein, dass eine vorgelagerte, nicht dargestellte Fertigungseinheit ausgebildet ist, mittels welcher die Rohbretter aus einem Baumstamm auf deren Rohmaß zugeschnitten werden können.

Vom Magazin 2, in welchem mehrere Rohbretter gelagert werden können, können diese mittels einem weiteren Zufördermittel 3 einer nachgeschalteten Hobelmaschine 4 zugeführt werden. In der Hobelmaschine 4 können die Rohbretter bezüglich deren Breite und deren Dicke auf ein bestimmtes Maß zugehobelt werden, um die Rohbretter anschließend weiterverarbeiten zu können.

Anschließend an die Hobelmaschine 4 kann eine Erfassungseinheit 5 vorgesehen sein, in welcher die zugehobelten Bretter durch verschiedene Erfassungsmittel erfasst werden können. Beispielsweise können die Bretter bezüglich deren Außengeometrie vermessen und erfasst werden. Insbesondere kann dabei die tatsächliche Breite die tatsächliche Dicke und die Länge der Bretter sowie eine Krümmung bzw. eine Torsion der Bretter erfasst werden. Darüber hinaus können Fehlerstellen, wie etwa Äste oder herausgebrochene Stellen in den Brettern ermittelt werden. Auf Basis der Information der vermessenen Bretter können diese anschließend in einer Kappsäge 6 zu einzelnen Lamellen 7 zugeschnitten werden. Die Bretter können dabei derart zugeschnitten werden, dass beispielsweise Fehlerstellen aus den Brettern herausgeschnitten werden.

Sämtliche bis hierhin beschriebene Anlagenteile können einzeln oder auch zur Gänze entfallen, anders ausgeführt sein, oder durch zusätzliche Anlagenteile ergänzt sein.

Mit einem weiteren Zufördermittel 3 können die Lamellen 7 einer Vorrichtung 8 zum Herstellen von Lamellenlagen 9 aus hintereinander aufgereihten Lamellen 7 zugeführt werden.

Die Vorrichtung 8 kann zumindest zwei Pufferstationen 10 aufweisen, welche zum Aufnehmen und zum Zwischenspeichern von Lamellen 7 mit unterschiedlicher Lamellenlänge 11 ausgebildet sind. Um eine grobe Vorsortierung der Lamellen 7 durchführen zu können kann die Lamellenlänge 11 der einzelnen Lamellen 7 bekannt sein. Dies kann beispielsweise durch Vermessen der Lamellenlänge 11 der einzelnen Lamellen 7 erreicht werden. Alternativ kann vorgesehen sein, dass die Lamellenlängen 11 der einzelnen Lamellen 7 durch die Zuschnittinformationen der Kappsäge 6 bekannt ist.

Damit die Vorrichtung 8 nicht eine zu große Zahl an Pufferstationen 10 aufweist, sind diese Pufferstationen 10 so ausgebildet, dass in ihnen Lamellen 7 eines jeweiligen Längenbereiches gepuffert werden können. Somit sind zumindest zwei Pufferstationen 10 vorgesehen. Es können jedoch eine Vielzahl von Pufferstationen vorgesehen sein.

Im vorliegenden Ausführungsbeispiel sind beispielsweise drei Pufferstationen 10 vorgesehen.

So kann die erste Pufferstation 10 beispielsweise Lamellen 7 in einem Längenbereich von beispielsweise etwa 3.000 bis 1.500 mm die zweite Pufferstation 10 Lamellen 7 in einem Längenbereich von beispielsweise etwa 1.500 bis 800 mm und die dritte Pufferstation 10 Lamellen 7 in einem Längenbereich von beispielsweise etwa 800 bis 300 mm aufnehmen.

Somit können die Lamellen 7 bereits grob vorsortiert in den einzelnen Pufferstationen 10 aufgenommen sein.

Weiters können erste Übergabestationen 12 vorgesehen sein, mittels welchen die Lamellen 7 vom Zufördermittel 3 auf die Pufferstationen 10 übergeben werden können. Derartige Übergabestationen 12 können beispielsweise in Form von einfachen Schiebern ausgebildet sein.

In den Pufferstationen 10 kann ein Pufferstationsfördermittel 13 vorgesehen sein, mittels welchem die in die jeweilige Pufferstation 10 übergebenen Lamellen 7 quer zu Ihrer Längsausrichtung gefördert werden können. Die Pufferstationsfördermittel 13 können beispielsweise in Form von einzelnen schmalen Förderbändern ausgebildet sein, auf welchen die Lamellen 7 aufliegen. In einer alternativen Ausführungsvariante kann beispielsweise auch vorgesehen sein, dass das Pufferstationsfördermittel 13 durch ein breites Förderband gebildet ist, welches sich über die komplette Breite der Pufferstation erstreckt.

Von den einzelnen Pufferstationen 10 können die Lamellen 7 auf ein Fördermittel 14 übergeben werden, welches die Lamellen 7 in Förderrichtung 15 fördert und auf welchem Lamellen 7 mit unterschiedlicher Länge 11 hintereinander aufgelegt werden. Optional können zur Übergabe der Lamellen 7 von der Pufferstation 10 auf das Fördermittel 14 zweite Übergabestationen 16 ausgebildet sein.

In einer Alternativvariante können die Lamellen 7 direkt durch die Pufferstationsfördermittel 13 auf das Fördermittel 14 ausgeschoben werden, wodurch die zweiten Übergabestationen 16 entfallen können.

Erfindungsgemäß werden die Lamellen 7 derart von den einzelnen Pufferstationen 10 auf das Fördermittel 14 übergeben und aneinander gereiht, dass mehrere hintereinander aufgereihte Lamellen 7 die Lamellenlage 9 bilden können. Insbesondere werden dabei die Lamellen 7 so gewählt, dass die Summe der Lamellenlängen 11 der einzelnen Lamellen 7 größer ist als eine gewünschte Länge 17 der Lamellenlage 9.

Eine endseitige Lamelle 18 der aneinander aufgereihten Lamellen 7 ist somit zu lange und wird mittels einem Trennmittel 19 durchtrennt. Dadurch ergibt sich ein Reststück 20.

Erfindungsgemäß ist weiters vorgesehen, dass die einzelnen Lamellen 7 so zur Lamellenlage 9 zusammengesetzt werden, dass eine Länge 21 des Reststückes 20 so groß ausfällt, dass das Reststück 20 in einer nachfolgenden Lamellenlage 9 verwendet werden kann, wobei dieses dort als Lamelle 7 bezeichnet wird. Die Länge 21 des Reststückes 20 ergibt sich im Wesentlichen aus der Summe der Längen 11 der einzelnen Lamellen 7 minus der gewünschten Länge 17 der Lamellenlage 9, wobei sie natürlich um die Schnittbreite des Trennmittels 19 kürzer ist. Darüber hinaus kann die Länge 21 des Reststückes 20 dadurch, dass die einzelnen Lamellen 7 stirnseitig nicht sauber aneinander anliegen und/oder aufgrund der Toleranzen der Länge 11 der einzelnen Lamellen 7 geringfügig variieren.

Jener Bereich des Fördermittels 14 an welchem das Trennmittel 19 ausgebildet ist, wird in diesem Dokument auch als Abtrennbereich 22 bezeichnet. Der Abtrennbereich 22 kann einen Abtrennanschlag 23 aufweisen, an welchem die einzelnen Lamellen 7 anliegen können und somit aufgestaut werden können. Somit kann durch einen Abstand 24 zwischen Abtrennanschlag 23 und dem Trennmittel 19 die gewünschte Länge 17 der Lamellenlage 9 definiert werden. Der Abstand 24 und die gewünschte Länge 17 der Lamellenlage 9 sind somit gleich groß.

Das Trennmittel 19 kann beispielsweise in Form einer Kreissäge 25 ausgebildet sein. Weiters kann vorgesehen sein, dass das Fördermittel 14 in einzelne Förderabschnitte 26 aufgeteilt ist, sodass das Trennmittel 19 zum Abtrennen der endseitigen Lamelle 18 zwischen die einzelnen Förderabschnitte 26 einfahren kann. Die einzelnen Förderabschnitte 26 können beispielsweise in Form von aneinander gereihten Bandförderern ausgebildet sein.

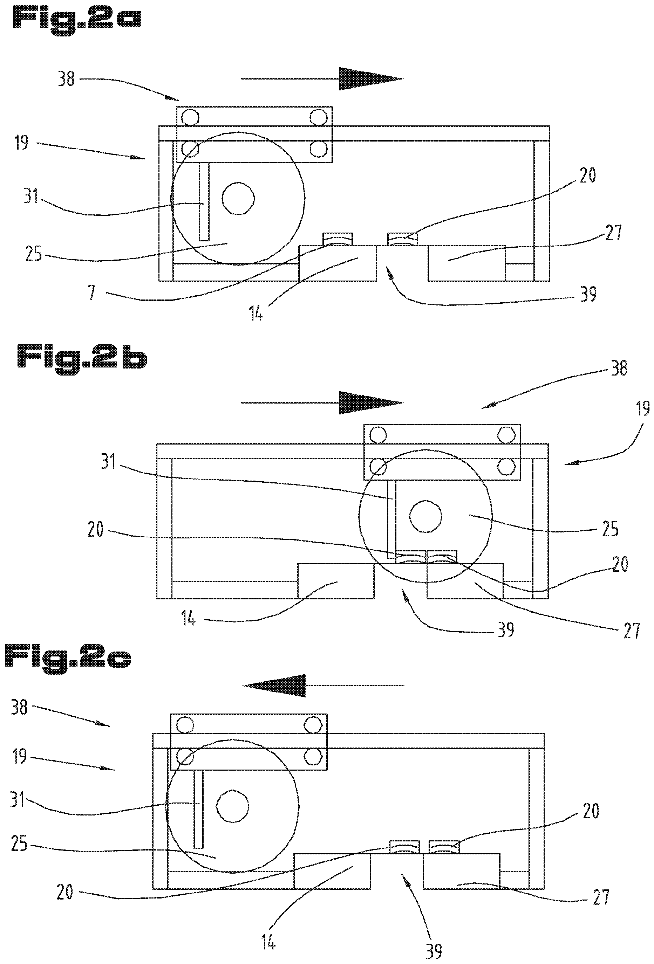

Eine mögliche Ausgestaltung des Trennmittels 19 wird in weiterer Folge in Fig. 2 skizziert.

Erfindungsgemäß ist weiters vorgesehen, dass das Reststück 20 der endseitigen Lamelle 18 auf ein Reststückfördermittel 27 übergeben wird und dort zwischengespeichert wird und einer nachfolgenden Lamellenlage 9 zugeführt werden kann. Insbesondere kann eine Auslagerungsvorrichtung 28 vorgesehen sein, mittels welcher das Reststück 20 vom Fördermittel 14 auf das Reststückfördermittel 27 übergeben werden kann.

Das Reststückfördermittel 27 ist vorzugsweise parallel zum Fördermittel 14 angeordnet. Insbesondere kann vorgesehen sein, dass das Reststückfördermittel 27 an der den Pufferstationen 10 gegenüberliegenden Seite des Fördermittels 14 angeordnet ist.

Eine Förderrichtung 29 des Reststückfördermittels 27 kann vorzugsweise entgegengesetzt zur Förderrichtung 15 des Fördermittels 14 sein, wodurch die Reststücke 20 zurück in den Bereich der Pufferstationen 10 gefördert werden können. Zur Bildung einer neuen Lamellenlage 9 können somit nicht nur die in den Pufferstationen 10 eingelagerten Lamellen 7 verwendet werden, sondern können auch die Reststücke 20 zur Verwendung in nachfolgenden Lamellenlagen verwendet werden. Insbesondere kann dabei vorgesehen sein, dass eine Eingliederungsvorrichtung 30 ausgebildet ist, mittels welcher die Reststücke 20 vom Reststückfördermittel 27 auf das Fördermittel 14 übergeben werden können. Sowohl die Auslagerungsvorrichtung 28 als auch die Eingliederungsvorrichtung 30 können beispielsweise in Form eines einfachen Schiebers 31 ausgebildet sein.

In einer alternativen Ausführungsvariante kann natürlich auch vorgesehen sein, dass die Auslagerungsvorrichtung 28 und die Eingliederungsvorrichtung 30, beispielsweise in Form von Hubportalen oder sonstigen technischen Einrichtungen, ausgebildet sind.

Weiters kann ein Erfassungsmittel 32 vorgesehen sein, welches zur genauen Erfassung der Länge 21 der Reststücke 20 dient. Das Erfassungsmittel 33 ist vorzugsweise im Bereich des Reststückfördermittels 27 angeordnet. Insbesondere kann vorgesehen sein, dass das Erfassungsmittel 32 in Form eines Lichtschrankes ausgebildet ist und dass die Länge 21 des Reststückes 20 aus der Schaltung des Erfassungsmittels 32 und aus der Fördergeschwindigkeit des Reststückfördermittels 27 berechnet wird.

Wenn das Reststück 20 an der Eingliederungsvorrichtung 30 angekommen ist, ist somit im Idealfall dessen exakte Länge 21 bekannt.

Das Reststück 20 kann als Lamelle 7 gesehen werden und zusammen mit den weiteren Lamellen 7 zu einer Lamellenlage 9 zusammengefügt werden. Das Reststückfördermittel 27 ist im übertragenen Sinne eine weitere Pufferstation 10. Wird somit von einzelnen Lamellen 7 gesprochen, die zur Bildung der Lamellenlage 9 aus den Pufferstationen 10 entnommen werden, so können dies auch ehemalig Reststücke 20 sein, welche am Reststückfördermittel 27 aufgenommen sein können.

Insbesondere kann vorgesehen sein, dass mehrere der Reststücke 20 am Reststückfördermittel 27 aufgenommen werden können. Die Anzahl der auf dem Reststückfördermittel 27 aufgenommenen Reststück 20 bestimmt somit die Anzahl der zwischenliegenden Lamellenlagen 9 zwischen jener Lamellenlage 9 von der das Reststück 20 abgetrennt und entnommen wird und jener nachfolgenden Lamellenlage 9 in welcher das Reststück 20 als Lamelle 7 behandelt wird und wieder mit anderen Lamellen 7 zu einer Lamellenlage 9 zusammengesetzt wird.

Die Eingliederungsvorrichtung 30 ist vorzugsweise gegenüberliegend zu den Pufferstationen 10 mit den Rohlamellen 7 ausgebildet.

Weiters kann vorgesehen sein, dass im Bereich der Eingliederungsvorrichtung 30 ein Abstand 33 zwischen den einzelnen Pufferstationen 10 ausgebildet ist. Dadurch kann das Reststück 20 kollisionsfrei auf das Fördermittel 14 geschoben werden.

Wie aus Fig. 1 ersichtlich kann vorgesehen sein, dass die Eingliederungsvorrichtung 30 zwischen der ersten Pufferstation 10 und der zweiten Pufferstation 10 angeordnet ist.

Zur Minimierung der Durchlaufzeiten bzw. zur Erhöhung der Taktfrequenz und somit der Leistungsfähigkeit der Vorrichtung 8 kann ein Zusammenführbereich 34 vorgesehen sein, in welchem ein Zusammenführanschlag 35 angeordnet ist. Im Zusammenführbereich 34 kann die vorderste Lamelle 7 am Zusammenführanschlag 35 anliegen, wodurch die einzelnen Lamellen 7 stirnseitig aneinander anliegend zusammengeführt werden können. Dadurch kann ein Abstand 36 in welchem die Lamellen 7 am Fördermittel 14 aufgelegt sind, im Zusammenführbereich 34 auf Null gebracht werden.

Parallel zum Zusammenführen der Lamellen 7 zu einer Lamellenlage 9 kann in Förderrichtung 15 stromabwärts gesehen, im Abtrennbereich 22 eine vorhergehende Lamellenlage 9 auf dessen gewünschte Länge 17 zugeschnitten werden. Somit kann der notwendige Zeitaufwand zum Zusammenführen der Lamellen 7 parallel zum notwendigen Zeitaufwand zum Abschneiden des Reststückes 20 erfolgen kann.

Wenn kein Zusammenführbereich 34 ausgebildet ist, kann das Zusammenführen der einzelnen Lamellen 7 natürlich auch im Abtrennbereich 22 erfolgen.

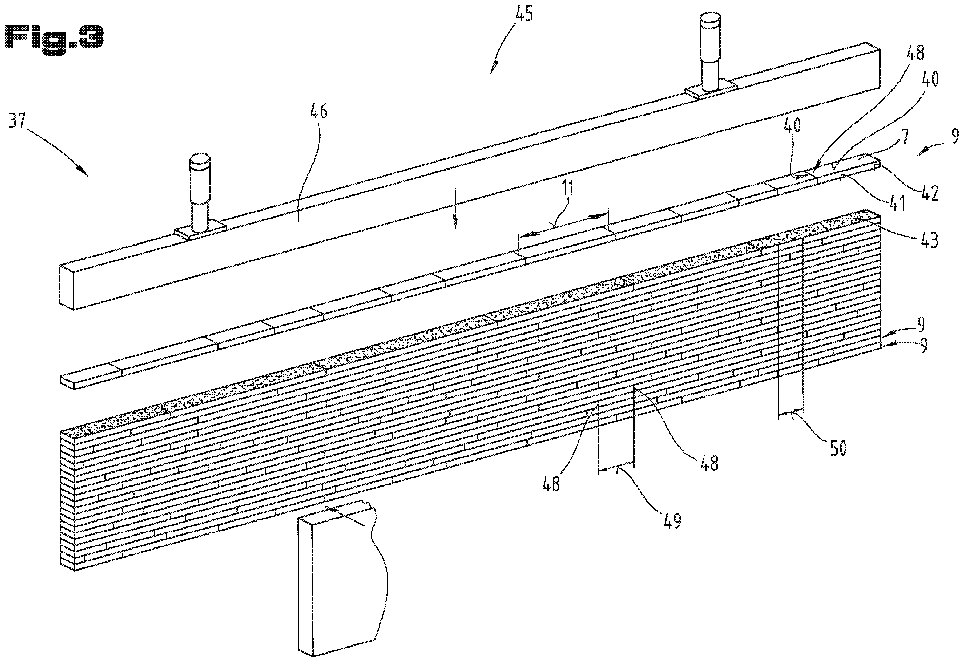

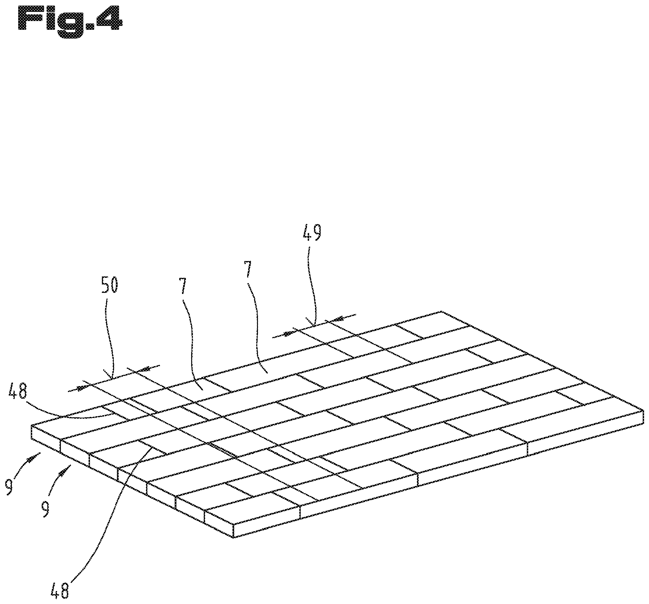

Nach dem erfolgten Abtrennen des Reststückes 20 wird der Abtrennanschlag 23 aus der Förderstrecke des Fördermittels 14 gebracht und die Lamellenlage 9 kann einer weiteren Bearbeitungsstation 37 zu Weiterverarbeitung der Lamellenlagen 9 zugeführt werden. Die weitere Bearbeitungsstation 37 kann verschiedenartig ausgebildet sein, wobei in den Fig. 3 und 4 verschiedene Möglichkeiten zur Verwendung der Lamellenlagen 9 aufgezeigt werden.

Fig. 2 zeigt eine mögliche Ausführungsvariante des Trennmittels 19 in einer Schnittdarstellung gemäß der Schnittlinie II - II aus Fig. 1. Wie aus Fig. 2 ersichtlich, kann das Trennmittel 19, insbesondere die Kreissäge 25, an einem Verfahrschlitten 38 angeordnet sein. Weiters kann am Verfahrschlitten 38 der Schieber 31 angeordnet sein. Wie aus den Fig. 2 ersichtlich, kann zwischen dem Fördermittel 14 und dem Reststückfördermittel 27 ein Zwischenpuffer 39 vorgesehen sein, an welchem die abgetrennten Reststücke 20 zwischengelagert werden können.

In den Figuren 2a-c ist der Abtrennvorgang zum Abtrennen der Reststücke 20 in den einzelnen Verfahrensschritten dargestellt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Ansicht nach Fig. 2a befindet sich das Trennmittel 19 in der Ruhestellung. Am Zwischenpuffer 39 liegt das Reststück 20 des vorherigen Abtrennvorganges.

Entsprechend der Fig. 2b wird zum Abtrennen des Reststückes 20 das Trennmittel 19 in Richtung zur Lamelle 7 verschoben und diese durchtrennt. Nach dem Durchtrennen der Lamelle 7 kommt bei weiterer Verschiebung der Schieber 31 mit dem Reststück 20 in Eingrifft und verschiebt dieses entweder direkt auf das Reststückfördermittel 27 oder, wie in Fig. 2b dargestellt, in den Zwischenpuffer 39. Dabei kann das bereits auf dem Zwischenpuffer 39 liegende Reststück 20 am aktuell abgetrennten Reststück 20 anliegen und über dieses auf das Reststückfördermittel 27 verschoben werden.

Nach dem Beenden dieses Trennvorganges bzw. Verschiebevorganges des Reststückes 20 wird die Trennvorrichtung 19 entsprechend der Fig. 2c wieder in ihre Ruhestellung zurückbewegt, um das Einfahren einer neuen Lamellenlage 9 zu ermöglichen.

Anders als in Fig. 2 dargestellt kann auch vorgesehen sein, dass die Reststücke 20 mittels dem Schieber 31 direkt vom Fördermittel 14 auf das Reststückfördermittel 27 verschoben werden und somit der Verfahrweg des Verfahrschlittens 38 größer gestaltet werden muss.

Fig. 3 zeigt eine mögliche Ausführungsvariante eines Teils der weiteren Bearbeitungsstation 37, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in der vorangegangenen Figuren 1 und 2 hingewiesen bzw. Bezug genommen.

Wie aus Fig. 3 ersichtlich, kann vorgesehen sein, dass die einzelnen Lamellenlagen 9 bestehend aus einzelnen Lamellen 7 übereinander angeordnet werden und mit ihren Längsseiten aneinander anliegen. Die Längsseiten, welche hierbei aneinander anliegen, sind insbesondere die Deckflächen 40 und die Grundflächen 41 der Lamellen 7. Die Seitenflächen 42 der Lamellen 7 liegen in diesem Ausführungsbeispiel nicht aneinander an.

Weiters kann vorgesehen sein, dass an der Deckfläche 40 bzw. an der Grundfläche 41 eine Leimschicht 43 aufgetragen ist, mittels welcher die einzelnen Lamellenlagen 9 miteinander zu einem Mehrschichtholz verleimt werden können. Die Leimschicht 43 kann in einer Beleimstation auf die Lamellen 7 aufgetragen werden. Die Beleimstation kann hierbei entweder direkt vor der weiteren Bearbeitungsstation 37 angeordnet sein oder in dieser integriert sein oder auch schon im Bereich der Vorrichtung 8 zum Herstellen der Lamellenlagen 9 angeordnet sein. Somit ist es auch möglich, dass eine Stirnseite 40 der Lamellen 7 mit einer Leimschicht 43 bezogen ist.

Wie aus Fig. 3 ersichtlich, kann vorgesehen sein, dass eine Presse 45 ausgebildet ist, in welcher die einzelnen Lamellenlagen 9 miteinander verpresst werden. Insbesondere kann die Presse 45 einen ersten Pressstempel 46 und einen zweiten Pressstempel 47 aufweisen, mittels welchem die einzelnen Lamellenlagen 9 miteinander verpresst werden können.

Um eine möglichst hohe Stabilität des Mehrschichtholzes zu erreichen, sollte vorgesehen sein, dass stirnseitige Fugen 48 von stirnseitig aneinander anliegenden Lamellen 7 in den einzelnen Lamellenlagen 9 einen möglichst großen Abstand 49 zueinander aufweisen. Darüber hinaus kann darauf geachtet werden, dass in einem kritischen Abstand 50 eines Mehrschichtholzes nur eine gewisse Anzahl an stirnseitigen Fugen 48 der Gesamtheit der Lamellenlagen 9 angeordnet ist. Dadurch kann vermieden werden, dass im Mehrschichtholz eine sogenannte Schwächungslinie ausgebildet ist.

Weiters kann vorgesehen sein, dass nach dem Verpressen das Mehrschichtholz in Scheiben geschnitten wird, welche zu einer Platte zusammengeleimt werden und als Mittelschicht in einer Dreischichtplatte verbaut werden. Eine derartig hergestellte Mittelschicht in einer Dreischichtplatte weist sehr gute Festigkeitseigenschaften auf.

Fig. 4 zeigt eine weitere Ausführungsvariante der weiteren Bearbeitungsstation 37, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in der vorangegangenen Figuren 1 bis 3 hingewiesen bzw. Bezug genommen.

Entsprechend einer weiteren Ausführungsvariante nach Fig. 4 kann auch vorgesehen sein, dass die einzelnen Lamellenlagen 9 nicht übereinander angeordnet werden, sondern dass die einzelnen Lamellenlagen 9 nebeneinander zu Holzplatten angeordnet werden und somit mit deren Seitenfläche 42 aneinander anliegen. Hierbei kann es sinnvoll sein, wenn die Stirnseiten 44 der Lamellen 7 ebenfalls verleimt sind.

Die weitere Bearbeitungsstation 37 kann hierbei entsprechend anders ausgeführt sein, um derartig aneinander gereihte Lamellenlagen 9 entsprechend verarbeiten zu können.

Insbesondere können derartige aneinander gereihte Lamellenlagen 9 als Deckschichtdielen verwendet werden.

Analog zur Beschreibung bzw. Darstellung in Fig. 3 wird auch hier darauf geachtet, dass der Abstand 49 von Fugen benachbarter Lamellenlagen 9 möglichst groß ist. Auch in diesem Ausführungsbeispiel kann vorgesehen sein, dass darauf geachtet wird, dass in einem kritischen Abstand 50 nur eine gewisse Anzahl an stirnseitigen Fugen 48 angeordnet ist.

Der kritische Abstand 50 kann aufgrund von Festigkeitsberechnungen auf einen vorbestimmten Wert festgelegt werden. Beispielsweise kann vorgesehen sein, dass in einem Mehrschichtholz in maximal 4 Lamellenlagen 9 die stirnseitige Fuge 48 innerhalb des kritischen Abstandes 50 von beispielsweise 10 cm liegen darf.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 29 | Förderrichtung Reststückfördermittel |
| 2 | Magazin | | |
| 3 | Zufördermittel | 30 | Eingliederungsvorrichtung |
| 4 | Hobelmaschine | 31 | Schieber |
| 5 | Erfassungseinheit | 32 | Erfassungsmittel |
| 6 | Kappsäge | 33 | Abstand Pufferstationen |
| 7 | Lamelle | 34 | Zusammenführbereich |
| 8 | Vorrichtung | 35 | Zusammenführanschlag |
| 9 | Lamellenlage | 36 | Abstand zwischen Lamellen |
| 10 | Pufferstation | 37 | weitere Bearbeitungsstation |
| 11 | Lamellenlänge | 38 | Verfahrschlitten |
| 12 | erste Übergabestation | 39 | Zwischenpuffer |
| 13 | Pufferstationsfördermittel | 40 | Deckfläche |
| 14 | Fördermittel | 41 | Grundfläche |
| 15 | Förderrichtung Fördermittel | 42 | Seitenfläche |
| 16 | zweite Übergabestation | 43 | Leimschicht |
| 17 | Länge Lamellenlage | 44 | Stirnseite Lamelle |
| 18 | endseitige Lamelle | 45 | Presse |
| 19 | Trennmittel | 46 | erster Pressstempel |
| 20 | Reststück | 47 | zweiter Pressstempel |
| 21 | Länge Reststück | 48 | stirnseitige Fuge |
| 22 | Abtrennbereich | 49 | Abstand von Fugen benachbarter Lamellenlagen |
| 23 | Abtrennanschlag | | |
| 24 | Abstand Abtrennanschlag - Trennmittel | 50 | kritischer Abstand |
| | | | |
| 25 | Kreissäge | | |
| 26 | Förderabschnitt | | |
| 27 | Reststückfördermittel | | |
| 28 | Auslagerungsvorrichtung | | |

## Patentansprüche

1. Verfahren zum Herstellen von Lamellenlagen (9) aus hintereinander aufgereihten Lamellen (7), wobei die Lamellen (7) so hintereinander gesetzt werden, dass die Summe der Lamellenlänge (11) wenigstens der Länge (17) der herzustellenden Lamellenlage (9) entspricht, wobei für die Lamellen (7) unterschiedlicher Längen (11) zumindest eine Pufferstation (10) vorgesehen ist, der die Lamellen (7) zur Bildung der Lamellenlagen (9) entnommen werden, wobei die Lamellen (7) auf einem Fördermittel (14) so zusammengefügt werden, dass die endseitige Lamelle (18) innerhalb der Lamellenlage (9) so lang ist und so abgetrennt wird, dass die Lamellenlage (9) die gewünschte Länge (17) hat und das abgetrennte Reststück (20) der endseitigen Lamelle (18) in einer nachfolgenden Lamellenlage (9) eingesetzt werden kann, **dadurch gekennzeichnet, dass** das Reststück (20) der endseitigen Lamelle (18) aus dem Förderfluss entnommen wird, auf einem Reststückfördermittel (27) zwischengespeichert wird und in einer nachfolgenden Lamellenlage (9) entsprechend einer Lamelle (7) eingesetzt wird, wobei das abgetrennte Reststück (20) nicht das erste Stück einer direkt nächsten nachfolgenden Lamellenlage (9) bildet.

2. Verfahren nach Anspruch 1, **dadurch gekennzeichnet, dass** das Reststück (20) nach dem Abtrennen, mittels einem Erfassungsmittel (32), welches insbesondere am Reststückfördermittel (27) angeordnet ist, vermessen wird und dessen Länge (21) ermittelt wird.

3. Verfahren nach Anspruch 1 oder 2, **dadurch gekennzeichnet, dass** das Reststück (20) zwischen zwei Lamellen (7) einer nachfolgenden Lamellenlage (9) eingesetzt wird.

4. Verfahren nach einem der vorhergehenden Ansprüche, **dadurch gekennzeichnet, dass** die Lamellenlagen (9) mit ihren Längsseiten aneinanderliegend zu einem Mehrschichtholz verleimt werden, wobei das Reststück (20) der endseitigen Lamelle (18) so in eine nachfolgende Lamellenlage (9) eingesetzt wird, dass die stirnseitigen Fugen (48) zwischen den einzelnen Lamellen (7) von aneinander anliegenden Lamellenlagen (9) einen möglichst gro-ßen Abstand (49) zueinander aufweisen.

5. Verfahren nach einem der vorhergehenden Ansprüche, **dadurch gekennzeichnet, dass** die einzelnen Lamellen (7) einer Lamellenlage (9) in einem Zusammenführbereich (34) stirnseitig auf Anschlag aneinander zusammengeführt werden, während stromabwärts in einem Abtrennbereich (22) an der vorhergehenden Lamellenlage (9) die endseitige Lamelle (18) abgetrennt wird.

6. Verfahren nach einem der vorhergehenden Ansprüche, **dadurch gekennzeichnet, dass** das Reststück (20) einer Lamellenlage (9) frühestens in einer auf die direkt folgende Lamellenlage (9) nachfolgenden Lamellenlage (9) eingesetzt wird.

7. Verfahren nach einem der vorhergehenden Ansprüche, **dadurch gekennzeichnet, dass** am Reststückfördermittel (27) mehrere Reststücke (20) gleichzeitig aufgenommen sind.

8. Vorrichtung (8) zum Herstellen von Lamellenlagen (9) aus hintereinander aufgereihten Lamellen (7) zum Durchführen eines Verfahrens nach einem der vorhergehenden Ansprüche, die Vorrichtung (8) umfassend:
- zumindest eine, vorzugsweise zumindest zwei, Pufferstation/en (10), welche zum Aufnehmen von verschieden langen Lamellen (7) ausgebildet ist/sind;
- ein Fördermittel (14) zum Fördern der aus der/den Pufferstation/en (10) entnommenen Lamellen (7) und zum Sammeln der Lamellen (7) zu einer Lamellenlage (9);
- einen Abtrennanschlag (23), welcher im Bereich des Fördermittels (14) angeordnet ist und zum Aufstauen der auf dem Fördermittel (14) angeordneten Lamellen (7) ausgebildet ist;
ein Trennmittel (19) zum Abtrennen einer endseitigen Lamelle (18) der auf dem Fördermittel (14) angeordneten Lamellenlage (9) auf eine gewünschte Länge (17), wodurch ein Reststück (20) von der endseitigen Lamelle (18) abgetrennt wird, wobei die Länge (17) durch den Abstand (24) zwischen dem Abtrennanschlag (23) und dem Trennmittel (19) definiert wird,
**dadurch gekennzeichnet, dass** ein Reststückfördermittel (27) zur Aufnahme des abgetrennten Reststückes (20) der endseitigen Lamelle (18) vorgesehen ist, wobei eine Auslagerungsvorrichtung (28) zur Übergabe des Reststückes (20) vom Fördermittel (14) auf das Reststückfördermittel (27) vorgesehen ist, wobei das Reststückfördermittel (27) zum Fördern des Reststückes (20) entgegen der Förderrichtung (15) des Fördermittels (14) ausgebildet ist, und wobei eine Eingliederungsvorrichtung (30) vorgesehen ist, wobei die Eingliederungsvorrichtung (30) derart ausgebildet ist, dass das Reststück (20) derart wieder auf das Fördermittel (14) überführbar ist, dass das abgetrennte Reststück (20) nicht das erste Stück einer direkt nächsten nachfolgenden Lamellenlage (9) bildet.

9. Vorrichtung nach Anspruch 8, **dadurch gekennzeichnet, dass** ein Zusammenführanschlag (35) vorgesehen ist, welcher am Fördermittel (14) stromaufwärts des Abtrennanschlages (23) angeordnet ist und zum Zusammenführen der einzelnen Lamellen (7) zu einer Lamellenlage (9) dient.

10. Vorrichtung nach einem der Ansprüche 8 bis 9, **dadurch gekennzeichnet, dass** die Auslagerungsvorrichtung (28) und/oder die Eingliederungsvorrichtung (30) in Form eines Schiebers (31) ausgebildet sind, welcher quer zur Förderrichtung (15) des Fördermittels (14) wirkt.

11. Vorrichtung nach einem der Ansprüche 8 bis 10, **dadurch gekennzeichnet, dass** das Trennmittel (19) zum Abtrennen der endseitigen Lamelle (18) in Form einer Kreissäge (25) ausgebildet ist, welche an einem Verfahrschlitten (38) gelagert ist und dass die Auslagerungsvorrichtung (28) ebenfalls am Verfahrschlitten (38) angeordnet ist.

12. Vorrichtung nach einem der Ansprüche 8 bis 11, **dadurch gekennzeichnet, dass** das Fördermittel (14) und/oder das Reststückfördermittel (27) mehrere verschiedene Förderabschnitte (26) aufweist.

## Claims

1. A method for producing slat layers (9) from slats (7) arranged behind one another, wherein the slats (7) are placed behind one another such that the sum of the slat length (11) corresponds at least to the length (17) of the slat layer (9) to be produced, wherein at least one buffer station (10) is provided for the slats (7) of different lengths (11), from which buffer station (10) the slats (7) are removed for forming the slat layers (9), wherein the slats (7) are combined on a conveying means (14) such that the end slat (18) inside the slat layer (9) is so long and is severed such that the slat layer (9) has the desired length (17), and the severed remaining piece (20) of the end slat (18) can be inserted into a subsequent slat layer (9), **characterized in that** the remaining piece (20) of the end slat (18) is taken from the conveying stream, is temporarily stored on a remaining piece conveying means (27), and is inserted in a subsequent slat layer (9) according to a slat (7), wherein the severed remaining piece (20) does not form the first piece of a directly next, subsequent slat layer (9).

2. The method according to claim 1, **characterized in that** after being severed, the remaining piece (20) is measured and its length (21) is determined by means of a detection means (32), which is, in particular, arranged on the remaining piece conveying means (27).

3. The method according to claim 1 or 2, **characterized in that** the remaining piece (20) is inserted between two slats (7) of a subsequent slat layer (9).

4. The method according to one of the preceding claims, **characterized in that** the slat layers (9) are bonded with their longitudinal sides being contiguous to form a multilayer wood, wherein the remaining piece (20) of the end slat (18) is inserted into a subsequent slat layer (9) such that the front side joints (48) between the individual slats (7) of adjacent slat layers (9) have as great a distance (49) as possible from one another.

5. The method according to one of the preceding claims, **characterized in that** the individual slats (7) of a slat layer (9) are joined to a stop in a joining region (34), while the end slat (18) is severed downstream in a severing region (22) at the previous slat layer (9).

6. The method according to one of the preceding claims, **characterized in that** the remaining piece (20) of a slat layer (9) is inserted, at the earliest, in a slat layer (9) following the directly subsequent slat layer (9).

7. The method according to one of the preceding claims, **characterized in that** multiple remaining pieces (20) are received simultaneously at the remaining piece conveying means (27).

8. A device (8) for producing slat layers (9) from slats (7) arranged behind one another, for performing a method according to one of the preceding claims, the device (8) comprising:
- at least one, preferably at least two, buffer station/s (10), which is/are designed for receiving slats (7) of different lengths;
- a conveying means (14) for conveying slats (7) removed from the buffer station/s (10) and for collecting the slats (7) to form a slat layer (9);
- a severing stop (23), which is arranged in the region of the conveying means (14) and is designed for accumulating the slats (7) arranged on the conveying means (14);
a severing means (19) for severing an end slat (18) of the slat layer (9) arranged on the conveying means (14) to a desired length (17), whereby a remaining piece (20) of the end slat (18) is severed, wherein the length (17) is defined by the distance (24) between the severing stop (23) and the severing means (19),
**characterized in that** a remaining piece conveying means (27) for receiving the severed remaining piece (20) of the end slat (18) is provided, wherein a retrieval device (28) for transferring the remaining piece (20) from the conveying means (14) onto the remaining piece conveying means (27) is provided, wherein the remaining piece conveying means (27) is designed for conveying the remaining piece (20) against the conveying direction (15) of the conveying means (14), and wherein an integrating device (30) is provided, wherein the integrating device (30) is formed such that the remaining piece (20) is transferable back onto the conveying means (14) such that the severed remaining piece (20) is not the first piece of a directly next subsequent slat layer (9).

9. The device according to claim 8, **characterized in that** a joining stop (35) is provided, which is arranged on the conveying means (14), upstream of the severing stop (23), and serves to join the individual slats (7) to form a slat layer (9).

10. The device according to one of claims 8 to 9, **characterized in that** the retrieval device (28) and/or the integrating device (30) are designed in the form of a slider (31), which acts transversely to the conveying direction (15) of the conveying means (14).

11. The device according to one of claims 8 to 10, **characterized in that** the severing means (19) for severing the end slat (18) is designed in the form of a circular saw (25), which is mounted on a sliding carriage (38), and that the retrieval device (28) is also arranged on the sliding carriage (38).

12. The device according to one of claims 8 to 11, **characterized in that** the conveying means (14) and/or the remaining piece conveying means (27) has multiple different conveying sections (26).

## Revendications

1. Procédé de fabrication de couches de lamelles (9) à partir de lamelles (7) rangées les unes derrière les autres, dans lequel les lamelles (7) sont placées les unes derrière les autres de façon à ce que la somme des longueurs de lamelles (11) corresponde au moins à la longueur (17) de la couche de lamelles (9) à réaliser, dans lequel, pour les lamelles (7) de différentes longueurs (11), au moins une station tampon (10) est prévue, de laquelle les lamelles (7) sont prélevées pour la formation des couches de lamelles (9), dans lequel les lamelles (7) sont assemblées sur un moyen de convoyage (14), de façon à ce que la lamelle d'extrémité (18) à l'intérieur de la couche de lamelles (9) présente une longueur et soit séparée de façon à ce que la couche de lamelles (9) présente la longueur (17) souhaitée et le morceau restant découpé (20) de la lamelle d'extrémité (18) puisse être inséré dans une couche de lamelles (9) suivante, **caractérisé en ce que** le morceau restant (20) de la lamelle d'extrémité (18) est retiré du flux de convoyage, entreposé sur un moyen de convoyage de morceau restant (27) et est inséré dans une couche de lamelles (9) suivante correspondant à une lamelle (7), dans lequel le morceau restant séparé (20) ne constitue pas le premier morceau d'une couche de lamelles (9) qui suit immédiatement.

2. Procédé selon la revendication 1, **caractérisé en ce que** le morceau restant (20) est mesuré, après la séparation, à l'aide d'un moyen de mesure (32) qui est disposé plus particulièrement sur le moyen de convoyage de morceau restant (27), et sa longueur (21) est déterminée.

3. Procédé selon la revendication 1 ou 2, **caractérisé en ce que** le morceau restant (20) est inséré entre deux lamelles (7) d'une couche de lamelles (9) suivante.

4. Procédé selon l'une des revendications précédentes, **caractérisé en ce que** les couches de lamelles (9) sont collées, avec leurs côtés longitudinaux, de manière juxtaposée afin d'obtenir un bois multicouche, dans lequel le morceau restant (20) de la lamelle d'extrémité (18) est inséré dans une couche de lamelles (9) suivante de façon à ce que les joints frontaux (48) entre les différentes lamelles (7) de couches de lamelles (9) adjacentes entre elles présentent entre eux une distance (49) la plus grande possible.

5. Procédé selon l'une des revendications précédentes, **caractérisé en ce que** les différentes lamelles (7) d'une couche de lamelles (9) sont regroupées, dans une zone de regroupement (34), côté frontal en butée entre elles, tandis que, en aval, dans une zone de séparation (22) sur la couche de lamelles (9) précédente, la lamelle d'extrémité (18) est séparée.

6. Procédé selon l'une des revendications précédentes, **caractérisé en ce que** le morceau restant (20) d'une couche de lamelles (9) est insérée au plus tôt dans une couche de lamelles suivante (9) suivant directement la couche de lamelles (9).

7. Procédé selon l'une des revendications précédentes, **caractérisé en ce que**, sur le moyen de convoyage des morceaux restants (27), plusieurs morceaux restants (20) sont pris en charge simultanément.

8. Dispositif (8) pour la fabrication de couches de lamelles (9) à partir de lamelles (7) alignées les unes derrières les autres pour l'exécution d'un procédé selon l'une des revendications précédentes, ce dispositif (8) comprenant :
- au moins une, de préférence au moins deux stations tampons (10), qui sont conçues pour le logement de lamelles (7) de différentes longueurs ;
- un moyen de convoyage (14) pour le convoyage des lamelles (7) prélevées dans la ou les stations tampons (10) et pour l'assemblage des lamelles (7) en une couche de lamelles (9) ;
- une butée de séparation (23), qui est disposée au niveau du moyen de convoyage (14) et qui est conçue pour l'accumulation des lamelles (7) disposées sur le moyen de convoyage(14) ;
un moyen de séparation (19) pour la séparation d'une lamelle d'extrémité (18) de la couche de lamelles (9) disposée sur le moyen de convoyage (14) à une longueur (17) souhaitée, ce qui permet de séparer un morceau restant (20) de la lamelle d'extrémité (18), dans lequel la longueur (17) est définie par la distance (24) entre la butée de séparation (23) et le moyen de séparation (19),
**caractérisé en ce qu'**un moyen de convoyage de morceaux restants (27) est prévu pour le logement du morceau restant séparé (20) de la lamelle d'extrémité (18), dans lequel un dispositif de transfert (28) est prévu pour le transfert du morceau restant (20) du moyen de convoyage (14) vers le moyen de convoyage de morceaux restants (27), dans lequel le moyen de convoyage de morceaux restants (27) est conçu pour le convoyage du morceau restant (20) à l'encontre de la direction de convoyage (15) du moyen de convoyage (14), et dans lequel un dispositif d'insertion (30) est prévu, dans lequel le dispositif d'insertion (30) est conçu de façon à ce que le morceau restant (20) puisse être transféré à nouveau sur le moyen de convoyage (14), de sorte que le morceau restant (20) séparé ne constitue pas le premier morceau d'une couche de lamelles (9) qui suit immédiatement.

9. Dispositif selon la revendication 8, **caractérisé en ce qu'**une butée de regroupement (35) est prévue, qui est disposée sur le moyen de convoyage (14) en amont de la butée de séparation (23) et qui permet de regrouper les différentes lamelles (7) en une couche de lamelles (9).

10. Dispositif selon l'une des revendications 8 à 9, **caractérisé en ce que** le dispositif de transfert (28) et/ou le dispositif d'insertion (30) sont conçus sous la forme d'un curseur (31) qui agit transversalement par rapport à la direction de convoyage (15) du moyen de convoyage (14).

11. Dispositif selon l'une des revendications 8 à 10, **caractérisé en ce que** le moyen de séparation (19) pour la séparation de la lamelle d'extrémité (18) est conçu sous la forme d'une scie circulaire (25), qui est logée sur un chariot mobile (38) et **en ce que** le dispositif de transfert (28) est également disposé sur le chariot de déplacement (38).

12. Dispositif selon l'une des revendications 8 à 11, **caractérisé en ce que** le moyen de convoyage (14) et/ou le moyen de convoyage de morceau restant (27) comprend plusieurs portions de convoyage (26) différentes.
